# EUROPÄISCHE PATENTSCHRIFT

(11) **EP 3 760 092 B1**
(45) Veröffentlichungstag und Bekanntmachung des Hinweises auf die Patenterteilung: **31.08.2022**
(21) Anmeldenummer: 20177924.6
(22) Anmeldetag: 03.06.2020
(51) Int. Cl.: A47L 9/30

(54) **BODENDÜSE UND STAUBSAUGER**
FLOOR NOZZLE AND VACUUM CLEANER
SUCEUR POUR SOLS ET ASPIRATEUR

(30) Priorität: 02.07.2019 DE 102019117761
(43) Veröffentlichungstag der Anmeldung: 06.01.2021
(73) Patentinhaber: Miele & Cie. KG, 33332 Gütersloh (DE)
(72) Erfinder: Abel, Thomas, 58515 Lüdenscheid (DE); Kleinheider, Heiko, 49176 Hilter-Borgloh (DE); Baxhenrich, Markus, 33607 Bielefeld (DE); Stenzel, Sebastian, 33818 Leopoldshöhe (DE); Geser, Willi, 33617 Bielefeld (DE)

(56) Entgegenhaltungen:
- EP-A1- 0 530 026
- JP-A- 2016 093 477
- KR-A- 20170 126 255

## Beschreibung

Die Erfindung betrifft eine Bodendüse und einen Staubsauger. Insbesondere betrifft die Erfindung eine Bodendüse mit einer Lichtquelle und einen Staubsauger, der die Bodendüse aufweist.

Eine Bodendüse, die eine Lichtquelle aufweist, ist aus der WO 2014/154995A1 bekannt. Die Bodendüse weist einen Körper mit einer Vorderkante, eine Lichtquelle sowie einen Lichtleiter auf. Positions- und Richtungsangaben beziehen sich auf eine Arbeitsposition der Bodendüse. An der Vorderkante ist eine Projektionsfläche angeordnet, die von der Lichtquelle ausgesendetes Licht mittels des Lichtleiters empfängt und auf einen zu reinigenden Untergrund aussendet. Hinter dem Lichtleiter ist ein Reflektor angeordnet, der eine flache Platte darstellt. Dadurch kann er nur das Licht reflektieren, das vom Lichtleiter nach hinten ausgekoppelt wird. Las Licht, das nach oben oder unten ausgekoppelt wird, wird nicht reflektiert und wird von einem Innenraum der Bodendüse absorbiert und geht somit als Lichtleistung ungenutzt verloren.

Die EP 0 530 026 A1 offenbart eine Bodendüse mit einer Glühbirne, welche über einen Lichtleiter mit einem Lichtauskoppelbereich entlang der Vorderkante der Bodendüse Licht aussendet. Der Lichtleiter weist am Lichtauskoppelbereich prismatische Ausnehmungen auf. Die JP 2016 093 477 A offenbart eine Bodendüse mit einer Lichtquelle, welche mittels eines Lichtleiters entlang einer Vorderkante der Bodendüse Licht aussendet. Der Lichtleiter weist am Lichtauskoppelbereich prismatische Ausnehmungen auf.

Aufgrund der Tatsache, dass der Reflektor hinter dem Lichtleiter sitzt, kann weiterhin Streulicht, das in die Bodendüse hineinstreut, an anderer Stelle zu ungewolltem Lichtaustritt führen. Dies hat zur Folge, dass die Bodendüse aus einer anderen Öffnung als durch einen eigentlichen Lichtbereich leuchtet, was zu einer geringwertigen Erscheinung der Bodendüse führt. Zudem kann das Licht unkontrolliert nach vorne emittiert werden, ohne dass das Licht zielgerichtet auf den Boden gerichtet wird. Somit geht viel Lichtleistung in der Ferne verloren, ohne dass der Benutzer davon etwas sieht.

Der Erfindung stellt sich somit das Problem, eine Bodendüse und einen Staubsauger bereitzustellen, die bei Betrieb ein homogenes Lichtbild erzeugen, eine maximale Ausnutzung der Lichtleistung erreichen und eine ungewollte Lichtauskopplung unterbinden.

Erfindungsgemäß wird dieses Problem durch eine Bodendüse mit den Merkmalen des Patentanspruchs 1 und einen Staubsauger mit den Merkmalen des Patentanspruchs 10 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem relativ homogenen Leuchtbild darin, dass eine homogene Ausleuchtung des zu saugenden Untergrunds ohne überbeleuchtete und unterbeleuchtete Flächen erreicht wird.

Die Erfindung betrifft eine Bodendüse, aufweisend
- einen Düsenkörper mit einer Vorderkante;
- eine Lichtquelle, die ausgebildet ist, Licht auszusenden; und
- einen Lichtleiter mit einem Lichtauskoppelbereich, der entlang der Vorderkante angeordnet ist und der ausgebildet ist, von der Lichtquelle ausgesendetes Licht zu empfangen und auf einen zu reinigenden Boden auszusenden, und der prismatische Ausnehmungen aufweist.

Der Lichtleiter weist im Lichtauskoppelbereich kleine prismatische Ausnehmungen auf, an denen das Licht aus dem Lichtleiter nach vorne umgelenkt und aus einer vorderen Lichtleiterfläche emittiert wird. Positions- und Richtungsangaben beziehen sich auf eine Arbeitsposition und/oder Arbeitsrichtung der Bodendüse.

Die Lichtquelle ist bevorzugt als eine oder mehrere LEDs (Leuchtdioden) ausgebildet. LEDs sind kostengünstig und leistungsstark.

In einer bevorzugten Ausführungsform weist die Bodendüse weiterhin einen Reflektor auf, der um den Lichtauskoppelbereich herum halbkreisförmig oder im Wesentlichen halbkreisförmig angeordnet ist. Dadurch wird auch Licht, das unkontrolliert aus dem Lichtleiter ausgekoppelt wird, nach vorne reflektiert. Dies führt weiterhin zu einem optimierten Wirkungsgrad. Durch die mehreren Umlenkungen von der Lichteinkoppelstelle an der Lichtquelle bzw. den LEDs bis in den vorderen Bereich zur Auskoppelung ist das Licht im Lichtleiter nicht optimal gleichgerichtet und kann auch an anderer Stelle als an der prismatischen Struktur auskoppeln. All dieses unkontrolliert ausgekoppelte Licht wird von der halbkreisförmigen Struktur des Reflektors aufgefangen und nach vorne reflektiert. Dadurch wird weiterhin eine optimale Ausbeute der Lichtleistung erzielt.

Bevorzugt weist der Reflektor auf einer den prismatischen Ausnehmungen gegenüberliegenden Fläche eine Prismenstruktur auf. D.h., die Prismenstruktur des Reflektors und die prismatischen Strukturen des Lichtleiters sind zueinander hinweisend angeordnet. Die Prismenstruktur sorgt weiterhin für eine weitere Homogenisierung des Erscheinungsbildes. So wird das Licht, welches von den prismatischen Strukturen des Lichtleiters nicht nach vorne umgelenkt sondern nach hinten emittiert wird, optimal vom Reflektor aufgenommen und entweder direkt oder durch eine zweite Umlenkung an der Prismenstruktur reflektiert.

In einer bevorzugten Ausführungsform weist die Bodendüse weiterhin eine Linse auf, die zwischen dem Lichtleiter und dem zu reinigenden Boden angeordnet ist, bezogen auf eine Arbeitsposition der Bodendüse. Durch die Linse wird das Licht gezielt auf den zu saugenden Untergrund fokussiert, so dass der Benutzer eine hellere Ausleuchtung des Fußbodens wahrnimmt. Es geht weiterhin weniger Lichtleistung in der Ferne verloren.

Bevorzugt ist die Linse als eine Fresnellinse ausgebildet. Diese ist relativ kostengünstig und verlangt wenig Materialeinsatz.

In einer bevorzugten Ausführungsform ist die Linse in einem Gehäuse-Oberteil der Bodendüse ausgebildet und/oder integriert. Das Gehäuse-Oberteil weist bevorzugt ein Sichtfenster auf, in das die Linse integriert ist. Diese Ausgestaltung ist kostengünstig.

Bevorzugt weisen die prismatischen Ausnehmungen jeweils eine Höhe auf, die von außen nach innen entlang einer Düsenbreite zunimmt, die quer bevorzugt senkrecht zur Arbeitsrichtung der Bodendüse angeordnet ist. Dadurch kann weiterhin eine gleichmäßige Auskopplung über die Düsenbreite erreicht werden.

Bevorzugt weist die Bodendüse eine einstückige Leiterkarte auf, auf der mindestens eine Lichtquelle, ein Bauteil zum Einstellen einer Lichtquellen-Versorgungsspannung, ein Kühlmittel zum Kühlen der mindestens einen Lichtquelle, ein Kontaktelement zur Verbindung mit einem ersten Stecker und ein Bauteil zum Glätten eines PWM-Signals angeordnet sind. Die mindestens eine Lichtquelle ist bevorzugt als LED ausgebildet. LEDs sind relativ kostengünstig und leistungsstark. Das Kühlmittel ist bevorzugt als eine Kühlfläche ausgebildet.

Der Lichtleiter ist bevorzugt mit der Leiterkarte verbunden. Der Lichtleiter weist mindestens eine Lichteinkoppelstelle zum Einkoppeln von von der mindestens einen Lichtquelle ausgesendetem Licht, den Lichtauskoppelbereich zum Auskoppeln des eingekoppelten Lichts auf einen zu reinigenden Untergrund und mindestens einen Lichteinführbereich zum Einführen des Lichts von der mindestens einen Lichteinkoppelstelle in den Lichtauskoppelbereich auf. In einer bevorzugten Ausführungsform ist der Lichtleiter aus Kunststoff ausgebildet. Der Lichtleiter ist bevorzugt das einzige Kunststoffbauteil, was an die einstückige Leiterkarte montiert ist. Somit kann eine optimale, toleranzunempfindliche Einkopplung der mindestens einen Lichtquelle bevorzugt LED in den Lichtleiter umgesetzt werden, ohne dass Abweichungen in anderen Bauteilen zu einem Verschieben vom Lichtquellen-Mittelpunkt und der entsprechenden Lichteinkoppelstelle führen. Bevorzugt weist der Lichtleiter benachbart zu der mindestens einen Lichteinkoppelstelle ein Befestigungselement mit einem Zentrierteil auf. Durch dieses Zentrierteil beispielsweise in Form einer oder mehrerer Zentrierrasten kann eine optimale Positionierung des Lichtquellen-Mittelpunktes zu der entsprechenden Lichteinkoppelstelle erreicht werden.

In einer bevorzugten Ausführungsform weist der Lichtleiter einen Durchmesser im Bereich von 1 bis 5 mm, bevorzugt 3 mm (±2 mm) auf. Dadurch wird eine Unterfahrhöhe nur gering beeinflusst. Die Unterfahrhöhe beträgt bevorzugt ≤65 mm, bevorzugter ≤60 mm. Alternativ oder zusätzlich bevorzugt weist der Lichtleiter einen Biegeradius im Bereich von 7 x Durchmesser > Biegeradius > 3 x Durchmesser auf. Durch derartige Biegeradien können Lichtverluste relativ gering gehalten werden. Weiterhin alternativ oder zusätzlich bevorzugt weist der Lichtleiter eine Auskoppellänge im Bereich von 70 bis 90 %, bevorzugt 80% (±10%) einer Düsenbreite auf, wobei die Düsenbreite sich quer zur Arbeitsrichtung der Bodendüse erstreckt.

Bevorzugt weist die Bodendüse eine Bürstenwalze auf. Dadurch kann eine höhere Reinigungsleistung erreicht werden. Die mindestens eine Lichtquelle ist bevorzugt hinter der Bürstenwalze angeordnet, bezogen auf eine Arbeitsposition der Bodendüse. Durch Anordnung der Lichtquelle hinter die Bürstenwalze ist eine vordere Randabsaugung optimiert. Die vordere Randabsaugung der Bodendüse liegt bevorzugt im Bereich von 15 bis 25 mm, bevorzugt 20 mm oder weniger.

In einer bevorzugten Ausführungsform ist die einstückige Leiterkarte zwischen dem Gelenk und der Bürstenwalze oberhalb eines Saugkanals angeordnet, bezogen auf die Arbeitsposition der Bodendüse. Dadurch wird relativ wenig Bauraum für die einstückige Leiterkarte benötigt.

Bevorzugt weist die Bodendüse zwei Lichteinführbereiche auf, die seitlich zu der Bürstenwalze angeordnet sind, und ist der Lichtauskoppelbereich in einem Bereich vor der Bürstenwalze angeordnet, bezogen auf die Arbeitsposition der Bodendüse. Die Lichtführung führt somit links und rechts um die Bürstenwalze herum in den vorderen Bereich der Bodendüse vor die Bürstenwalze, wo der Lichtauskoppelbereich beginnt, bezogen auf die Arbeitsposition der Bodendüse. Dadurch findet weiterhin eine homogene Auskopplung des Lichts zur Ausleuchtung des zu saugenden Untergrunds statt.

In einer bevorzugten Ausführungsform ist der Lichtleiter aus PMMA ausgebildet. Alternativ oder zusätzlich ist der Lichtleiter mit einem Transmissionsgrad von >91 %/5mm, bevorzugt >95%/5mm, bevorzugter >98%/5mm ausgebildet, gemessen nach ISO 13468-2. Dadurch kann auch bei einem langen Lichtleiterweg ein hoher Wirkungsgrad der Lichtleistung zu erzielen.

Bevorzugt ist der Reflektor aus einem weißen, hellgrauen oder silbernen Material ausgebildet. Dadurch ist er aus einem relativ gut reflektierenden Material gefertigt.

Die Erfindung betrifft ferner einen Staubsauger, der eine Bodendüse nach einer oder mehrerer der vorangehend beschriebenen Ausführungsformen aufweist.

Bevorzugt ist der Staubsauger als ein handgeführter Staubsauger ausgebildet. Unter dem Ausdruck "handgeführt" ist zu verstehen, dass der Staubsauger per Hand von dem Nutzer bei Betrieb geführt wird. Bevorzugter ist der Staubsauger als Stab-Staubsauger ausgebildet, der auch als Stiel-Staubsauger oder Stick-Staubsauger bezeichnet wird.

Der Staubsauger ist bevorzugt ein Akkustaubsauger. D.h., der Staubsauger weist einen Akkumulator auf und ist ausgelegt, mittels des Akkumulators als Stromquelle betrieben zu werden.

Ein Ausführungsbeispiel der Erfindung ist in den Zeichnungen rein schematisch dargestellt und wird nachfolgend näher beschrieben. Es zeigt
- Fig. 1: eine perspektivische Ansicht einer erfindungsgemäßen Bodendüse;
- Fig. 2: eine perspektivische Teilansicht der in Fig. 1 gezeigten Bodendüse;
- Fig. 3: eine weitere perspektivische Teilansicht der in Fig. 1 gezeigten Bodendüse;
- Fig. 4: eine Draufsicht auf die in Fig. 1 gezeigte Bodendüse;
- Fig. 5: eine Teil-Querschnittsansicht der in Fig. 1 gezeigten Bodendüse;
- Fig. 6: eine weitere Teil-Draufsicht der in Fig. 1 gezeigten Bodendüse;
- Fig. 7: eine vergrößerte Teilansicht der in Fig. 6 gezeigten Bodendüse;
- Fig. 8: eine vergrößerte Teilansicht der in Fig. 7 gezeigten Bodendüse;
- Fig. 9: eine weitere vergrößerte Teilansicht der in Fig. 7 gezeigten Bodendüse;
- Fig. 10: eine perspektivische Ansicht auf einen Teil der in Fig. 1 gezeigten Bodendüse;
- Fig. 11: eine vergrößerte Teil-Ansicht des in Fig. 10 gezeigten Teils der Bodendüse.

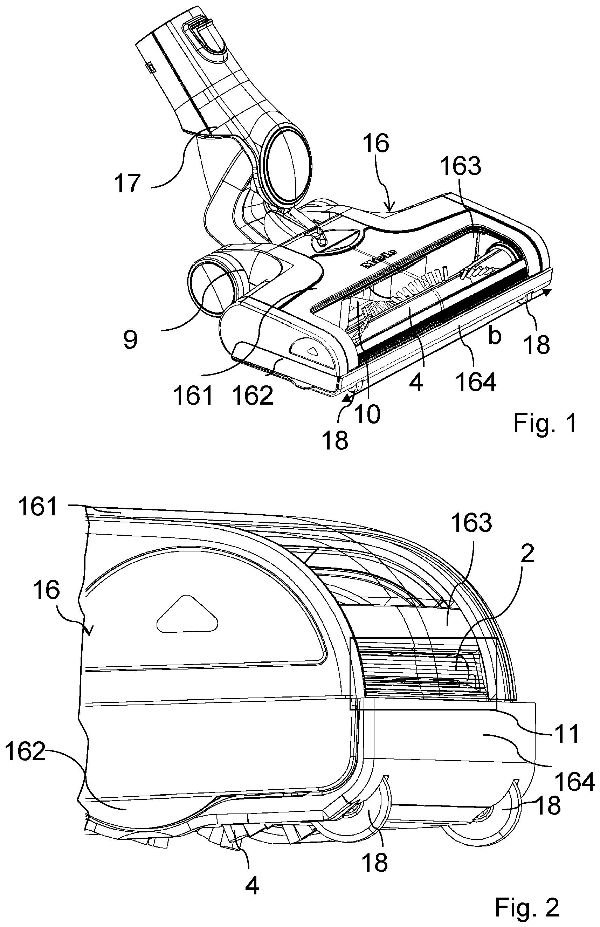

Fig. 1 zeigt eine perspektivische Ansicht einer erfindungsgemäßen Bodendüse. Die Bodendüse weist einen Düsenkörper 16, auf der ein Gehäuse-Oberteil 161 mit einem Sichtfenster 163, ein Gehäuse-Unterteil 162 sowie eine Vorderflanke 164 aufweist. Im Innern des Düsenkörpers 16 ist eine Bürstenwalze 4 angeordnet. Im Innern des Düsenkörpers 16 befindet sich weiterhin ein Saugkanal 10, in den bei Betrieb eines Staubsaugers (nicht gezeigt), der die Bodendüse aufweist, feste und/oder flüssige Partikel von dem zu saugenden Untergrund (nicht gezeigt) gesaugt werden. Die Bodendüse weist weiterhin ein Gelenk 9 auf, mittels dem ein Saugrohranschluss 17 der Bodendüse schwenk- und/oder kippbar ist. Weiterhin weist die Bodendüse Räder 18 auf, mittels der sie über den zu saugenden Untergrund fahrbar ist. Die Bodendüse weist eine Düsenbreite b auf, die sich quer insbesondere senkrecht zur Arbeitsrichtung der Bodendüse erstreckt.

Fig. 2 zeigt eine perspektivische Teilansicht der in Fig. 1 gezeigten Bodendüse. Die Bodendüse weist eine Linse 11 auf, die in das Sichtfenster 163 integriert ist. Die Bodendüse weist ferner einen Lichtleiter 2 auf, der durch das Sichtfenster 163 sichtbar ist.

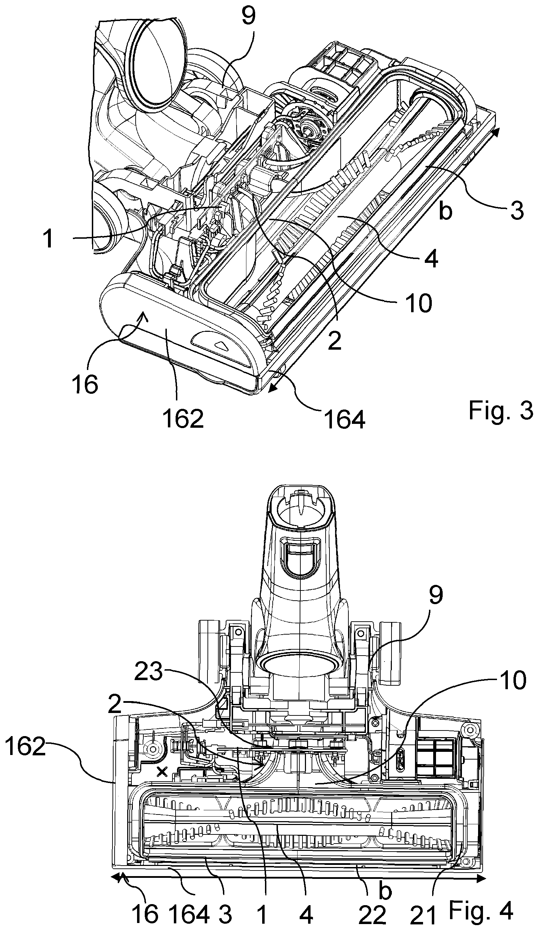

Fig. 3 zeigt eine weitere perspektivische Teilansicht der in Fig. 1 gezeigten Bodendüse. Das Gehäuse-Oberteil (nicht gezeigt) ist entfernt, so dass ein Blick in das Innere des Gehäuse-Unterteils 162 gezeigt ist. Die Bodendüse weist eine einstückige elektrische Leiterkarte 1 auf. Auf der einstückigen elektrischen Leiterkarte 1 sind - rein beispielhaft zwei - Lichtquellen (nicht gezeigt), ein Bauteil zum Einstellen einer Lichtquellen-Versorgungsspannung, ein Kühlmittel (nicht gezeigt) zum Kühlen der zwei Lichtquellen, ein Kontaktelement (nicht gezeigt) zur Verbindung mit einem ersten Stecker und ein Bauteil zum Glätten eines PWM-Signals (nicht gezeigt) angeordnet. Die Leiterkarte 1 ist zwischen dem Gelenk 9 und der Bürstenwalze 4 oberhalb des Saugkanals 10 angeordnet, bezogen auf die Arbeitsposition der Bodendüse. Die Bodendüse weist ferner einen Lichtleiter 2, der mit der Leiterkarte 1 verbunden ist, sowie einen Reflektor 3 auf. Der Lichtleiter 2 ist ausgebildet, von den Lichtquellen ausgesendetes Licht einzukoppeln und auf einen zu saugenden Untergrund (nicht gezeigt) auszukoppeln.

Fig. 4 zeigt eine Draufsicht auf die in Fig. 1 gezeigte Bodendüse. Das Gehäuse-Oberteil (nicht gezeigt) ist entfernt, so dass ein Blick in das Innere des Gehäuse-Unterteils 162 gezeigt ist. Der Lichtleiter 2 ist umlaufend um die Bürstenwalze 4 herum angeordnet. Der Lichtleiter 2 weist zwei Lichteinkoppelstellen 23 auf, zwei Lichteinführbereiche 21 und einen Lichtauskoppelbereich 22 auf. Die Lichteinkoppelstellen 23 sind hinter der Bürstenwalze 4 angeordnet, die Lichteinführbereiche 21 sind seitlich bzw. links und rechts um die Bürstenwalze 4 herum angeordnet und der Lichtauskoppelbereich ist vor der Bürstenwalze 4 angeordnet, bezogen auf die Arbeitsposition der Bodendüse. Benachbart zu dem Lichtleiter 2 ist der Reflektor 3 angeordnet.

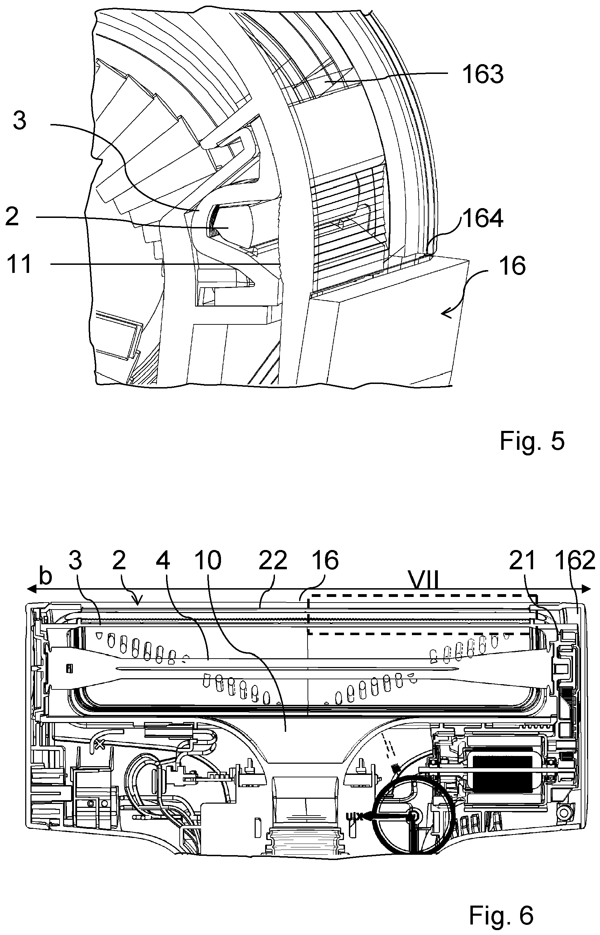

Fig. 5 zeigt eine Teil-Querschnittsansicht der in Fig. 1 gezeigten Bodendüse. Der Reflektor 3 ist halbkreisförmig um den Lichtleiter 2 herum angeordnet. Vor dem Lichtleiter 2 ist die Linse 11 in dem Sichtfenster 163 ausgebildet.

Fig. 6 zeigt eine weitere Teil-Draufsicht der in Fig. 1 gezeigten Bodendüse. Das Gehäuse-Oberteil (nicht gezeigt) ist entfernt, so dass ein Blick in das Innere des Gehäuse-Unterteils 162 gezeigt ist. Die Leiterkarte ist der Übersichtlichkeit halber weggelassen. Der Lichtleiter 2 ist um die Bürstenwalze 4 herumgeführt. Der Reflektor 3 ist zwischen dem Lichtauskoppelbereich 22 und der Bürstenwalze 4 angeordnet. Der Lichtleiter 2 ist zwischen dem Gehäusekörper 16 und dem Reflektor 3 angeordnet.

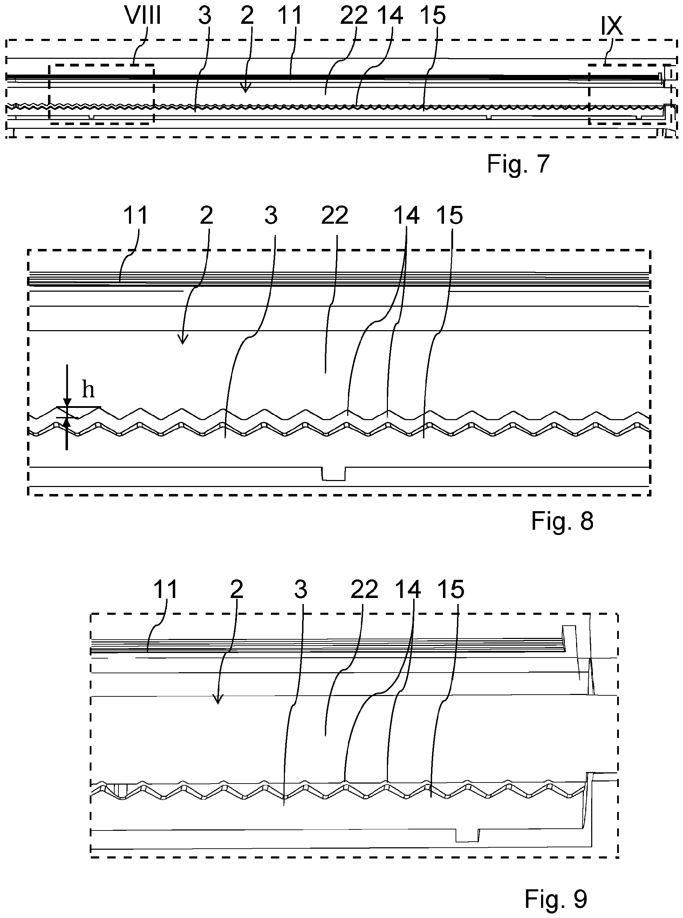

Fig. 7 zeigt eine vergrößerte Teilansicht der in Fig. 6 gezeigten Bodendüse, die in Fig. 6 als VII gekennzeichnet ist. Der Lichtleiter 2 insbesondere der Lichtauskoppelbereich 22 ist zwischen der Linse 11 und dem Reflektor 3 angeordnet. Der Lichtauskoppelbereich 22 weist prismatische Ausnehmungen 14 auf, während der Reflektor 3 eine Prismenstruktur 15 aufweist.

Fig. 8 und 9 zeigen jeweils eine vergrößerte Teilansicht der in Fig. 7 gezeigten Bodendüse, die in Fig. 7 als VIII bzw. IX gekennzeichnet ist. Die prismatischen Ausnehmungen 14 weisen eine Höhe h auf, die von außen nach innen entlang der Düsenbreite (nicht gezeigt) zunimmt, wie aus einem Vergleich der Fig. 8 und 9 ersichtlich ist. Fig. 9 zeigt im Vergleich zu Fig. 8 einen äußeren Bereich.

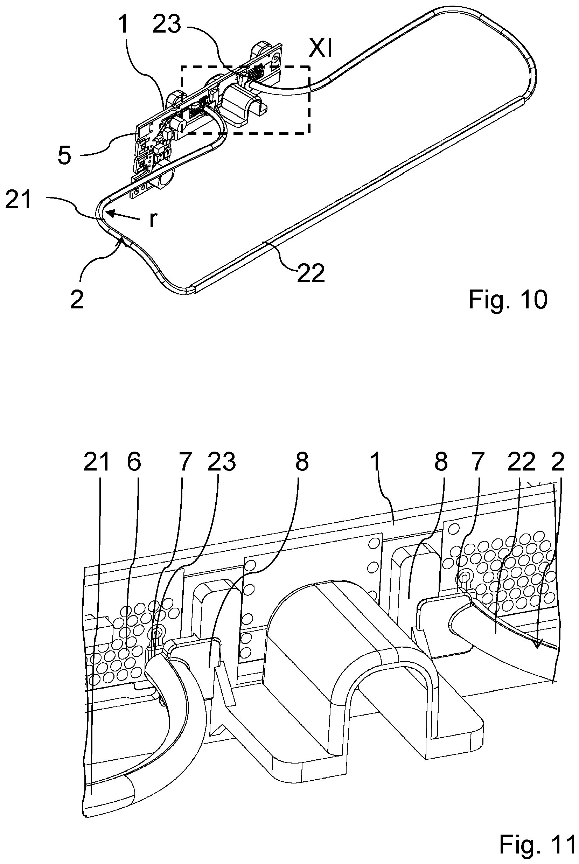

Fig. 10 zeigt eine perspektivische Ansicht auf einen Teil der in Fig. 1 gezeigten Bodendüse. Der Lichtleiter 2 ist ringförmig mit Biegeradien r ausgebildet. An den Lichteinkoppelstellen 23 ist der Lichtleiter 2 an die Leiterkarte 1 angeordnet und an ihr befestigt.

Fig. 11 zeigt eine vergrößerte Teil-Ansicht des in Fig. 10 gezeigten Teils der Bodendüse, die in Fig. 10 als IX gekennzeichnet ist. Die Bodendüse weist die Leiterkarte 1 mit den zwei Lichtquellen 7 auf, an denen jeweils eine Lichteinkoppelstelle 23 mittels jeweils eines Zentrierteils 8 befestigt ist. Ferner weist die Leiterkarte 1 zwei Kühlmittel 6 in Form einer Kühlfläche auf.

### Bezugszeichenliste

- b: Düsenbreite
- h: Höhe
- 1: Leiterkarte
- 2: Lichtkabel
- 3: Reflektor
- 4: Bürstenwalze
- 5: Kontaktelement
- 6: Kühlmittel
- 7: Lichtquelle
- 8: Befestigungselement
- 9: Gelenk
- 10: Saugkanal
- 11: Linse
- 14: Ausnehmung
- 15: Prismenstruktur
- 16: Düsenkörper
- 161: Gehäuse-Oberteil
- 162: Gehäuse-Unterteil
- 163: Sichtfenster
- 164: Vorderkante
- 17: Saugrohranschluss
- 18: Rad
- 21: Lichteinführbereich
- 22: Lichtauskoppelbereich
- 23: Lichteinkoppelstelle

## Patentansprüche

1. Bodendüse, aufweisend
- einen Düsenkörper (16) mit einer Vorderkante (164);
- eine Lichtquelle (7), die ausgebildet ist, Licht auszusenden; und
- einen Lichtleiter (2) mit einem Lichtauskoppelbereich (22), der entlang der Vorderkante (164) angeordnet ist und der ausgebildet ist, von der Lichtquelle (7) ausgesendetes Licht zu empfangen und auf einen zu reinigenden Boden auszusenden, und der prismatische Ausnehmungen (14) aufweist,
- **dadurch gekennzeichnet, dass** die prismatischen Ausnehmungen (14) jeweils eine Höhe (h) aufweisen, die von außen nach innen entlang einer Düsenbreite zunimmt, die quer zu einer Arbeitsrichtung der Bodendüse angeordnet ist

2. Bodendüse nach Anspruch 1, **gekennzeichnet durch** einen Reflektor (3), der um den Lichtauskoppelbereich (22) herum halbkreisförmig oder im Wesentlichen halbkreisförmig angeordnet ist.

3. Bodendüse nach Anspruch 2, **dadurch gekennzeichnet, dass** der Reflektor (3) auf einer den prismatischen Ausnehmungen (14) gegenüberliegenden Fläche eine Prismenstruktur (15) aufweist.

4. Bodendüse nach einem der vorangehenden Ansprüche, **gekennzeichnet durch** eine Linse (11), die zwischen dem Lichtleiter (2) und dem zu reinigenden Boden angeordnet ist, bezogen auf eine Arbeitsposition der Bodendüse.

5. Bodendüse nach Anspruch 4, **dadurch gekennzeichnet, dass** die Linse (11) als eine Fresnellinse ausgebildet ist.

6. Bodendüse nach einem der vorangehenden Ansprüche 4 oder 5, **dadurch gekennzeichnet, dass** die Linse (11) in einem Gehäuse-Oberteil der Bodendüse ausgebildet und/oder integriert ist.

7. Bodendüse nach einem der vorangehenden Ansprüche, **dadurch gekennzeichnet, dass** der Lichtleiter (2) aus PMMA ausgebildet ist und/oder mit einem Transmissionsgrad von >91%/5mm, bevorzugt >95%/5mm, bevorzugter >98%/5mm ausgebildet, gemessen nach ISO 13468-2.

8. Bodendüse nach einem der vorangehenden Ansprüche, **dadurch gekennzeichnet, dass** der Reflektor (3) aus einem weißen, hellgrauen oder silbernen Material ausgebildet ist.

9. Staubsauger, aufweisend eine Bodendüse nach einem der vorangehenden Ansprüche.

## Claims

1. Floor nozzle, comprising
- a nozzle body (16) having a front edge (164);
- a light source (7) which is designed to emit light; and
- a light guide (2) having a light decoupling region (22) which is arranged along the front edge (164) and is designed to receive light emitted by the light source (7) and to emit said light onto a floor to be cleaned, and which has prismatic recesses (14),
- **characterised in that** the prismatic recesses (14) each have a height (h) which increases from the outside inwards along a nozzle width which is arranged transversely to a working direction of the floor nozzle.

2. Floor nozzle according to claim 1, **characterised by** a reflector (3) which is arranged in a semicircular or substantially semicircular manner around the light decoupling region (22).

3. Floor nozzle according to claim 2, **characterised in that** the reflector (3) has a prism structure (15) on a surface opposite the prismatic recesses (14).

4. Floor nozzle according to any of the preceding claims, **characterised by** a lens (11) which is arranged between the light guide (2) and the floor to be cleaned, with respect to a working position of the floor nozzle.

5. Floor nozzle according to claim 4, **characterised in that** the lens (11) is designed as a Fresnel lens.

6. Floor nozzle according to either of the preceding claims 4 or 5, **characterised in that** the lens (11) is formed and/or integrated in an upper part of a housing of the floor nozzle.

7. Floor nozzle according to any of the preceding claims, **characterised in that** the light guide (2) is made of PMMA and/or has a transmittance of >91%/5 mm, preferably >95%/5 mm, more preferably >98%/5 mm, measured according to ISO 13468-2.

8. Floor nozzle according to any of the preceding claims, **characterised in that** the reflector (3) is made of a white, light grey or silver material.

9. Vacuum cleaner comprising a floor nozzle according to any of the preceding claims.

## Revendications

1. Buse de sol, comportant
- un corps de buse (16) comportant un bord avant (164) ;
- une source de lumière (7), laquelle est conçue pour émettre de la lumière ; et
- un guide de lumière (2) comportant une zone de découplage de lumière (22), lequel est disposé le long du bord avant (164) et lequel est conçu pour recevoir de la lumière émise par la source de lumière (7) et pour l'émettre sur un sol à nettoyer, et lequel comporte des évidements (14) prismatiques,
- **caractérisée en ce que** les évidements (14) prismatiques présentent respectivement une hauteur (h), laquelle augmente de l'extérieur vers l'intérieur le long d'une largeur de buse, laquelle est disposée transversalement à une direction de travail de la buse de sol.

2. Buse de sol selon la revendication 1, **caractérisée par** un réflecteur (3), lequel est disposé de manière semi-circulaire ou sensiblement semi-circulaire autour de la zone de découplage de lumière (22).

3. Buse de sol selon la revendication 2, **caractérisée en ce que** le réflecteur (3) comporte une structure prismatique (15) sur une surface opposée aux évidements (14) prismatiques.

4. Buse de sol selon l'une quelconque des revendications précédentes, **caractérisée par** une lentille (11), laquelle est disposée entre le guide de lumière (2) et le sol à nettoyer, par rapport à une position de travail de la buse de sol.

5. Buse de sol selon la revendication 4, **caractérisée en ce que** la lentille (11) est conçue sous la forme d'une lentille de Fresnel.

6. Buse de sol selon l'une quelconque des revendications précédentes 4 ou 5, **caractérisée en ce que** la lentille (11) est conçue et/ou intégrée dans une partie supérieure de boîtier de la buse de sol.

7. Buse de sol selon l'une quelconque des revendications précédentes, **caractérisée en ce que** le guide de lumière (2) est en PMMA et/ou est conçu avec un facteur de transmittance > 91 %/5 mm, de préférence > 95 %/5 mm, plus préférentiellement > 98 %/5 mm, mesurée selon la norme ISO 13468-2.

8. Buse de sol selon l'une quelconque des revendications précédentes, **caractérisée en ce que** le réflecteur (3) est conçu en une matière blanche, gris clair ou argentée.

9. Aspirateur, comportant une buse de sol selon l'une quelconque des revendications précédentes.
